# EUROPÄISCHE PATENTSCHRIFT

(11) **EP 3 182 073 B1**
(45) Veröffentlichungstag und Bekanntmachung des Hinweises auf die Patenterteilung: **06.02.2019**
(21) Anmeldenummer: 16199314.2
(22) Anmeldetag: 17.11.2016
(51) Int. Cl.: G01F 23/284, G01F 23/292, H02J 1/06, H02J 3/28, G01F 23/00, H02J 1/02, H02J 7/34, H02J 1/10, G01F 23/296

(54) **FÜLLSTANDMESSGERÄT MIT SERIELLER ANORDNUNG VON FUNKTIONSEINHEITEN**
FILL LEVEL MEASURING DEVICE WITH SERIAL ASSEMBLY OF FUNCTIONAL UNITS
APPAREIL DE MESURE DE NIVEAU DE REMPLISSAGE COMPRENANT DES UNITÉS FONCTIONNELLES EN SÉRIE

(30) Priorität: 15.12.2015 DE 102015225297
(43) Veröffentlichungstag der Anmeldung: 21.06.2017
(60) Teilanmeldung: 18200818.5
(73) Patentinhaber: VEGA Grieshaber KG, 77709 Wolfach (DE)
(72) Erfinder: KECH, Günter, 77709 Wolfach (DE); DECK, Thomas, 77709 Wolfach (DE); GRIEßBAUM, Karl, 77796 Mühlenbach (DE)
(74) Vertreter: Maiwald Patent- und Rechtsanwaltsgesellschaft mbH

(56) Entgegenhaltungen:
- EP-A1- 1 989 519
- WO-A1-2011/049523
- DE-A1-102007 006 027
- DE-C1- 19 643 013
- US-A1- 2004 183 550
- US-A1- 2008 074 309

## Beschreibung

### Gebiet der Erfindung

Die Erfindung betrifft ein Füllstandmessgerät mit einer seriellen Anordnung von Funktionseinheiten. Insbesondere betrifft die Erfindung ein Füllstandmessgerät in Form eines Laufzeitsensors, der nach dem Radar-, TDR- oder Ultraschallprinzip arbeitet.

### Technischer Hintergrund

Füllstandmessgeräte und insbesondere Laufzeitsensoren zur Füllstandmessung, die nach dem Radar-, TDR- (Time Domain Reflectometry) oder Ultraschallprinzip arbeiten, weisen oft einen stark schwankenden Energieverbrauch auf, der durch die Abwechslung von energieintensiven Messphasen und Auswertephasen oder Pausenzeiten mit deutlich geringerem Energiebedarf hervorgerufen wird.

Die Füllstandmessgeräte weisen jeweils unterschiedliche Funktionseinheiten auf, bei denen es sich insbesondere um die Sensorelektronik, die Messelektronik und den Kommunikationsschaltkreis handelt. Eine oder mehrere dieser Funktionseinheiten weisen im Regelfall einen stark schwankenden Leistungsbedarf auf. "Stark schwankend" bedeutet, dass die maximale Leistungsaufnahme dieser Funktionseinheit größer ist als beispielsweise die dreifache durchschnittliche Leistungsaufnahme der Funktionseinheit, oder größer ist als zehnmal der minimalen Leistungsaufnahme der Funktionseinheit.

Ist ein solches Füllstandmessgerät an eine Zweileiterschleife angeschlossen, ist die Energieaufnahme bedingt durch den Zweileiterbetrieb (4-20mA oder Konstantstrom mit überlagerter digitaler Kommunikation) zumindest temporär konstant und fest vorgegeben und die sich ergebende aktuell verfügbare elektrische Leistung kann geringer sein als eine aktuelle, in der Messphase benötigte Leistung.

Daraus ergibt sich die Notwendigkeit eines Pufferspeichers zur Energiespeicherung, um ein temporäres Leistungsdefizit zu überbrücken. Dieser Puffer- oder Energiespeicher ist zentral angeordnet und dient für alle Funktions- bzw. Schaltungseinheiten des Sensors als Energiepuffer.

WO 2011/049523 A1 beschreibt eine Power-Management-Schaltung für ein Füllstandradar mit mehreren Konvertern und Kondensatoren.

### Zusammenfassung der Erfindung

Es ist eine Aufgabe der Erfindung, ein Füllstandmessgerät zum Anschluss an eine externe Energieversorgung anzugeben, welches ein effizientes Energiemanagement aufweist.

Diese Aufgabe wird durch die Merkmale des unabhängigen Patentanspruchs gelöst. Weiterbildungen der Erfindung ergeben sich aus den Unteransprüchen und der folgenden Beschreibung.

Die Erfindung betrifft ein Füllstandmessgerät, welches eine erste Funktionseinheit, eine zweite Funktionseinheit, einen ersten Energiespeicher und eine Entkopplungsschaltung aufweist. Die beiden Funktionseinheiten sind in Bezug auf eine externe Energieversorgung des Füllstandmessgeräts seriell geschaltet. Bei der externen Energieversorgung handelt es sich beispielsweise um eine Zweileiterschleife (mit konstantem Betriebsstrom oder einem Stromsignal 4-20mA).

Der erste Energiespeicher ist als Energiepuffer zum Ausgleich eines schwankenden Energieverbrauchs der zweiten Funktionseinheit ausgeführt und zu diesem Zwecke mit ihr verbunden. Dieser Energiepuffer sammelt Energie von der externen Energieversorgung, speichert sie und kann sie zur gegebenen Zeit an die zweite Funktionseinheit abgeben.

Die erste Entkopplungsschaltung ist zwischen der ersten Funktionseinheit und der zweiten Funktionseinheit angeordnet und zur bedarfsgerechten Aufteilung der zur Verfügung stehenden elektrischen Energie, welche von der externen Energieversorgung an das Füllstandmessgerät geliefert wird, zwischen der ersten Funktionseinheit und der zweiten Funktionseinheit ausgeführt,

Erfindugsgemäß ist es vorgesehen, dass zunächst die erste Funktionseinheit bevorzugt mit Energie versorgt wird und nur dann, wenn hierbei Überschussenergie zur Verfügung steht, diese Überschussenergie an die zweite Funktionseinheit und/oder den ersten Energiespeicher abgegeben wird. So kann dafür Sorge getragen werden, dass in jedem Fall die erste Funktionseinheit mit ausreichend Energie für deren Betrieb versorgt wird und, falls die zur Verfügung stehende Energiemenge entsprechend gering ist, die zweite Funktionseinheit und der erste Energiespeicher zeitweilig nicht oder nur in geringem Umfang mit Energie versorgt werden. Gemäß einer Ausführungsform der Erfindung ist die erste Entkopplungsschaltung zum Verhindern eines Stromflusses vom ersten Energiespeicher zur ersten Funktionseinheit ausgeführt. Dies kann beispielsweise durch das Anordnen einer Diode erfolgen.

Erfindungsgemäß ist die erste Funktionseinheit in Bezug auf die externe Energieversorgung des Füllstandmessgeräts vor der zweiten Funktionseinheit angeordnet.

Die Entkopplungsschaltung kann ausgeführt sein zu verhindern, dass Strom von der zweiten Funktionseinheit bzw. dem ersten Energiespeicher in Richtung der Anschlüsse des Füllstandmessgeräts an die externe Energieversorgung (und somit in Richtung der ersten Funktionseinheit) fließt.

Hierdurch kann vermieden werden, dass der erste Energiespeicher Energie an die erste Funktionseinheit abgibt.

Gemäß einer weiteren Ausführungsform der Erfindung weist das Füllstandmessgerät eine dritte Funktionseinheit auf, welche in Bezug auf die externe Energieversorgung seriell zur ersten und zweiten Funktionseinheit und zwischen der ersten und der zweiten Funktionseinheit angeordnet ist. Das Füllstandmessgerät weist in diesem Fall eine zweite Entkopplungsschaltung auf, welche zwischen der ersten Funktionseinheit und der dritten Funktionseinheit angeordnet ist und zur bedarfsgerechten Aufteilung der zur Verfügung stehenden Energie von der externen Energieversorgung zwischen der ersten Funktionseinheit und der dritten Funktionseinheit ausgeführt ist.

Gemäß einer weiteren Ausführungsform der Erfindung kann ein zweiter Energiespeicher vorgesehen sein, der als Energiepuffer zum Ausgleich eines schwankenden Energieverbrauchs der dritten Funktionseinheit ausgeführt ist.

Darüber hinaus können weitere, seriell zu den übrigen Funktionseinheiten angeordnete Funktionseinheiten und ggf. entsprechende, den Funktionseinheiten zugeordnete Energiespeicher vorgesehen sein.

Gemäß einer weiteren Ausführungsform der Erfindung weist die zweite Funktionseinheit eine schwankende Leistungsaufnahme auf, welche im Maximum mehr als dreimal so hoch ist wie die durchschnittliche Leistungsaufnahme der zweiten Funktionseinheit.

Die zweite Funktionseinheit weist also eine stark schwankende Leistungsaufnahme auf, deren Bedarfsspitzen über den entsprechenden Energiespeicher gepuffert werden.

Erfindungsgemäß handelt es sich bei der ersten Funktionseinheit um eine Kommunikationsschaltung des Füllstandmessgeräts.

Erfindungsgemäß handelt es sich bei der zweiten Funktionseinheit um die Messschaltung oder die Sensorschaltung des Füllstandmessgeräts.

Gemäß einer weiteren Ausführungsform der Erfindung ist das Füllstandmessgerät zum Anschluss an eine 4-20mA Zweileiterschleife ausgeführt, über welche das Füllstandmessgerät mit Energie für den Messbetrieb versorgbar ist und über welche der Messwert an eine externe Einrichtung kommunizierbar ist.

Gemäß einer weiteren Ausführungsform der Erfindung weist das Füllstandmessgerät eine Steuerung zum Steuern zumindest einer der Entkopplungsschaltungen und somit zumindest einer der bedarfsgerechten Aufteilungen der zur Verfügung stehenden Energie von der externen Energieversorgung zwischen der ersten Funktionseinheit und der zweiten Funktionseinheit auf.

Je nach Messphase, Betriebszustand der verschiedenen Funktionseinheiten und dem Ladezustand der einzelnen Energiespeieher können die Entkopplungsschaltungen so gesteuert werden, dass nur genau die Energiemenge durch die entsprechende Entkopplungsschaltung hindurchläuft, die beispielsweise von den davor geschalteten Funktionseinheiten nicht benötigt wird.

Im Folgenden werden mit Verweis auf die Figuren Ausführungsbeispiele der Erfindung beschrieben.

### Kurze Beschreibung der Figuren

Fig. 1 zeigt ein Blockschaltbild eines Füllstandmessgeräts.
Fig. 2 zeigt ein Blockschaltbild eines Füllstandmessgeräts gemäß einem Ausführungsbeispiel der Erfindung.
Fig. 3 zeigt ein Blockschaltbild eines Füllstandmessgeräts gemäß einem weiteren Ausführungsbeispiel der Erfindung.
Fig. 4 zeigt ein Blockschaltbild eines Füllstandmessgeräts gemäß einem weiteren Ausführungsbeispiel der Erfindung.
Fig. 5 zeigt ein Blockschaltbild eines Füllstandmessgeräts gemäß einem weiteren Ausführungsbeispiel der Erfindung.
Fig. 6 zeigt ein Blockschaltbild einer Entkopplungsschaltung gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

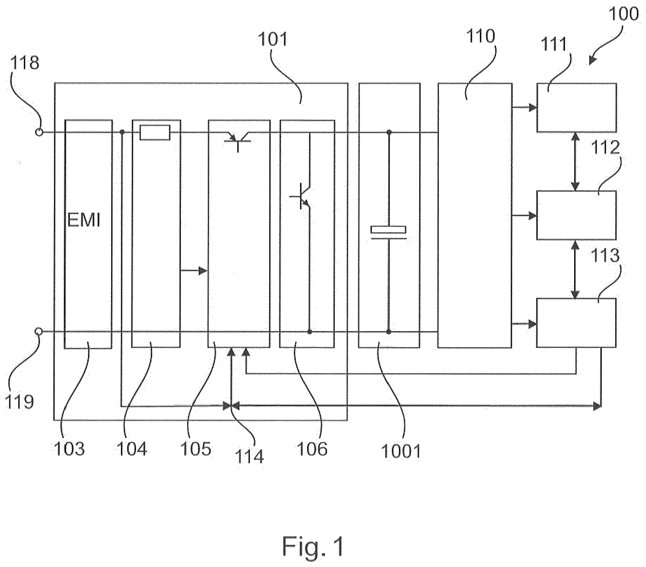

Fig. 1 zeigt ein Blockschaltbild eines Füllstandmessgeräts. Das Füllstandmessgerät weist eine sog. Sensor-Loop-Schnittstelle 101 auf, die eine EMV-Eingangsschaltung 103 zur Strombegrenzung, Spannungsbegrenzung, EMV-Filterung und ggf. zum Ex-Schutz umfasst. Darüber hinaus weist die Schnittstelle 101 einen Regler 105 für den Schleifenstrom mit einer Schleifenstrom-Istwerterfassung 104, eine Schleifenstrom-Sollwertvorgabe und einen Parallelstromzweig (Shunt) 106 auf.

Die Schleifenstrom-Istwerterfassung (Current Sense) 104 dient der Fühlung des Strom-Istwerts als Eingangsgröße für den Stromregler (Current Regulator) 105.

Der Stromregler 105 dient der Regelung des Schleifenstroms auf den gewünschten Ausgangsstrom, der im dargestellten Ausführungsbeispiel den Messwert in der Stromschleife repräsentiert. Er vergleicht den Strom-Istwert mit dem Strom-Sollwert, der auf einer Kommunikationsschaltung 113 bereitgestellt wird.

Diese Form der analogen Messwertübertragung über die Zweidrahtleitung ist beispielsweise als sogenannte 4-20mA-Zwcidrahtschleite bekannt und weit verbreitet.

Es sei darauf hingewiesen, dass es ebenso bekannt ist, den Messwert über eine Zweidrahtleitung digital zu Übertragen. In diesem Fall wird beispielsweise der Schleifenstrom durch den Stromregler 105 im Mittel konstant gehalten. Der Messwert lässt sich digitalisiert übertragen durch eine Modulation des Stroms mit einem entsprechenden Wechselspannungssignal.

Der Shunt 106 leitet den Anteil des Gesamtstroms (Schleifenstroms) ab, der von der nachfolgenden Schattung des Sensors nicht aufgenommen wird. Er ist ausgeführt als Spannungsbegrenzung oder Spannungsregelung (z. B. Regelung eines vorgegebenen Spannungsabfalls über den Längstransistor des Stromreglers 105).

Soll über die Zweidrahtleitung zusätzlich zu der analogen Messwertübertragung oder aber an Stelle der analogen Messwertübertragung eine digitale Kommunikation zwischen Füllstandmessgerät 100 und einer nicht dargestellten Gegenstelle stattfinden, kann dies beispielsweise über die standardisierte HART-Kommunikation erfolgen.

An der Position 1 14 kann sich hierzu ein HART-Modem befinden, welches das HART-Anfragesignal vom Master (nicht dargestellt) empfängt und das HART-Antwortsignal über den Stromregler 105 auf den Schleifenstram moduliert. Es erhält bzw. leitet HART-Daten weiter von/zu der Kommunikationsschaltung 113.

Der Energiespeicher 1001 dient der Energiepufferung zum Ausgleich von Energiebedarfsspitzen. Er entlädt sich nach der Trennung des Sensors von der Stromschleife und muss nach dessen Einschalten (Verbindung des Sensors mit der Stromschleife) über einen längeren Zeitraum geladen werden. Die Größe des Energiespeichers 1001 richtet sich nach dem Verhältnis von Durchschnittsenergieaufnahme zur Maximalenergieaufnahme des Sensors und nach dem Abstand von maximaler und minimaler Spannung am Pufferkondensator 1001.

Die und in den folgenden Figuren dargestellte Leistungsversorgung (Power Supply) 110 kann als Netzteilschaltung zur Versorgung aller Funktionseinheiten (Schaltungsteile) ausgeführt sein und enthält beispielsweise Schaltregler (Step-Down-Regulator, Step-Up-Regulator), Spannungsregler und/oder Glättungskond ensatoren.

Die Sensorelektronik 111 ist ein Schaltungsteil zur Erzeugung eines elektrischen Sensorsignals, das mit dem Messwert zusammenhängt bzw. aus dessen der Messwert berechnet oder abgeleitet werden kann. Sie dient der Wandlung einer physikalischen Messgröße (beispielsweise die Laufzeit des Messsignals vom Sensor zur Füllgutoberfläche und zurück) in ein elektrisches Signal (z. B. eine Echokurve), und enthält beispielsweise Hochfrequenz-Schaltungsteile, wie Sender, Empfänger, Koppler, Antenne, Mischer, Verstärker.

Bei der Sensorelektronik 111 handelt es sich um eine Funktionseinheit des Füllstandmessgeräts.

Die Messelektronik 112, bei der es sich ebenfalls um eine Funktionseinheit des Füllstandmessgeräts handelt, ist ein Schaltungsteil zur Auswertung des elektrischen Sensorsignals und zur Berechnung bzw. Ableitung eines entsprechenden Messwertes aus dem elektrischen Sensorsignal, beispielsweise in Form einer Echokurvenauswertung und/oder einer Störechobehandlung. Sie steuert die zyklisch wiederholte Messung und organsiert das Power-Management.

Die Kommunikationsschaltung 113 (auch hier handelt es sich um eine Funktionseinheit des Füllstandmessgeräts) organisiert die Kommunikation des Füllstandmessgeräts mit der Außenwelt, übermittelt den Ausgabewert (Stromwert) an den Stromregler, organisiert die HART-Kommunikation, organisiert die Kommunikation mit einer optionalen Anzeige-Bedieneinheit (nicht dargestellt) und kann Schaltungsteile für eine drahtlose Kommunikation aufweisen.

Das Füllstandmessgerät 100 ist über die Anschlüsse 118, 119 an die externe Energieversorgung anschließbar (nicht dargestellt). Bei der externen Energieversorgung handelt es sich beispielsweise um ein Zweidraht-Speise- und Auswertegerät. Die Zweidrahtleitung (beispielsweise eine 4-20mA-Zweidrahtleitung, hier nicht dargestellt) verbindet die Anschlüsse 118, 119 des Füllstandmessgeräts 100 mit dem Zweidraht-Speise- und-Auswertegerät.

Die Leistungsversorgung 110 versorgt die Sensorelektronik 111, die Messelektronik 112 und die Kommunikationsschaltung 113 mit elektrischer Energie und wird selber von Energie aus der Zweileiterschleife gespeist.

Der Energiespeicher 1001 ist zwischen der Sensor-Loop-Schnittstelle 101 und der Leistungsversorgung 110 angeordnet. Er ist zentral angeordnet und dient für alle Funktions-/Schaltungseinheiten des Sensors als Energiepuffer. Die Funktionseinheiten 111, 112, 113 sind aus Sicht des Energiespeichers parallel zueinander angeordnet. Der Energiespeicher 1001 wird ebenfalls von Energie aus der Zweileiterschleife gespeist und sorgt für einen direkten Ausgleich eines schwankenden Energieverbrauchs des Füllstandmessgeräts 100.

Der Energiespeicher sollte auf den energetisch ungünstigsten Fall ausgelegt sein und somit verhältnismäßig groß dimensioniert werden. Alternativ kann eine übergeordnete Management-Einheit vorgesehen sein, die die Leistungsverteilung koordiniert, um eine unzulässige Entladung des Energiespeichers, beispielsweise durch eine übermäßige, parallele Energieentnahme von verschiedenen Funktionseinheiten, zu vermeiden. Diese Management-Einheit wiederum bedeutet schaltungstechnischen Aufwand und belegt Ressourcen der Steuereinheit.

Durch die parallele Anordnung der Funktionseinheiten ist keine Priorisierung unter den Funktionseinheiten möglich. Für den Fall, dass bestimmte Funktionseinheiten temporär wichtiger sind als andere Funktionseinheiten, und unwichtigere Funktionseinheiten bei einer Energieknappheit zugunsten anderer ihre Funktion einschränken müssen, kann dies allenfalls durch eine übergeordnete Management-Einheit geregelt werden. Wünschenswert wäre aber eine automatische, hardwaremäßig vorgegebene "Vorfahrt" für wichtige Funktionseinheiten.

Auch kann eine gegenseitige Beeinflussung der Funktionseinheiten auftreten, weil sich die zufließende Energie parallel auf alle Funktionseinheiten und deren ggf. vorhandenen zugeordneten Energiespeicher verteilt. Die Verteilung hängt dabei auch vom Ladungs-/Entladungszustand der jeweiligen Energiespeicher ab.

Alternativ zum Ausführungsbeispiel der Fig. 1 können die einzelnen Funktionseinheiten seriell zueinander angeordnet werden, also insbesondere seriell in Bezug auf die externe Energieversorgung des Füllstandmessgeräts, welche an die Anschlüsse 118, 119 angeschlossen ist.

Die hierfür notwendigen geräteinternen Energiespeicher werden auf die einzelnen Funktionseinheiten aufgeteilt und an deren Erfordernisse angepasst, so dass jeder größenmäßig auf den Energiebedarf der entsprechenden Funktionseinheit ausgelegt ist.

Zusätzliche Entkopplungsschaltungen sorgen für eine Rangfolge der Aufteilung der zufließenden externen Energie und/oder verhindern Stromflüsse zum Ausgleich der Ladungen zwischen den voneinander getrennten Schaltungsblöcken, die die genannten Funktionseinheiten enthalten (also insbesondere zwischen einem Energiespeicher im einen Block und einer Funktionseinheit im benachbarten Block).

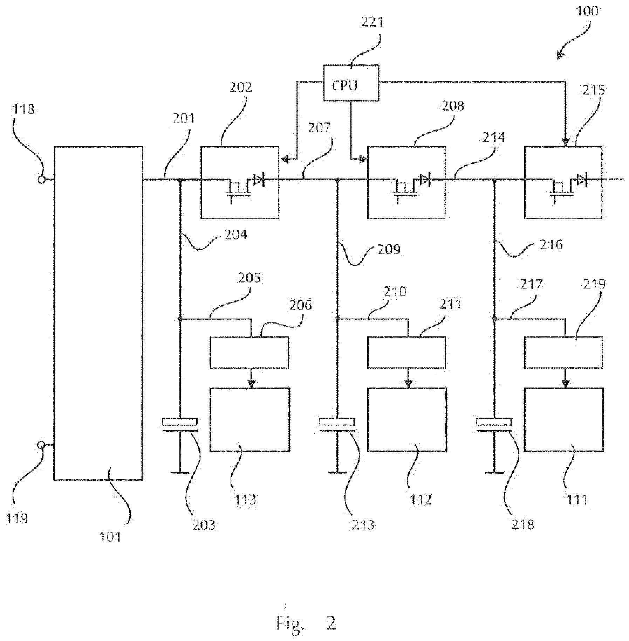

Fig. 2 zeigt ein Blockschaltbild eines entsprechenden Füllstandmessgeräts 100. Wie auch im Ausführungsbeispiel gemäß Fig. 1 weist das Füllstandmessgerät 100 eine Sensor-Loop-Schnittstelle 101 auf, welche über die Kontakte 118, 119 an die externe Energieversorgung angeschlossen ist (nicht dargestellt). Von der Sensor-Loop-Schnittstelle 101 geht die Leistungsversorgungsleitung 201 ab, welche die einzelnen Funktionseinheiten 111, 112, 113 des Füllstandmessgeräts mit Energie versorgt. Im Ausführungsbeispiel der Fig. 2 sind drei Schaltungsblöcke zu sehen, welche untereinander durch eine Entkopplungsschaltung 202, 208, voneinander entkoppelt sind. Durch die zusätzlich dargestellte weitere Entkopplungsschaltung 215 soll im gezeigten Beispiel angedeutet werden, dass die Reihenschaltung durch beliebig viele weitere Schaltungsblöcke mit weiteren Funktionseinheiten fortsetzbar ist, wobei die Entkopplung zu den vorhergehenden Schaltungsblöcken jeweils eine solche Entkopplungsschaltung erfordert. Für eine Reihenschaltung mit nur drei Schaltungsblöcken entfällt natürlich die Entkopplungsschaltung 215. Die Entkopplungsschaltungen liegen in der Leistungsversorgungsleitung 201, 207, 214 und es kann vorgesehen sein, dass eine Steuereinheit 221 vorgesehen ist, welche die Entkopplungsschaltungen steuern kann. Dies gilt für jedes der beschriebenen Ausführungsbeispiele.

Im ersten Schaltungsblock, welcher die erste Funktionseinheit 113 umfasst, befindet sich eine Abzweigung 204 von der Leistungsversorgungsleitung 201, an welche ein Energiespeicher 203 angeschlossen ist. Bei diesem und auch den anderen Energiespeichern 203, 213, 218 handelt es sich beispielsweise um einen Kondensator oder Akkumulator.

Von der Leitung 204 zweigt die Leitung 205 ab, welche die Leistungsversorgungsleitung 201 mit einer Leistungsversorgungseinheit 206 verbindet, die die Leistungsversorgung der ersten Funktionseinheit 113 steuert.

Die in der Fig. 2 dargestellten beiden weiteren Schaltungsblöcke sind entsprechend aufgebaut. Sie weisen jeweils eine Abzweigleitung 209, 216 auf, welche von der Leistungsversorgungsleitung 207 bzw. 214 abzweigt und die Leistungsversorgungsleitung mit einem Energiespeicher 213, 218 verbindet. Von der Abzweigung 209, 216 ist eine weitere Abzweigung 210, 217 vorgesehen, die zur Leistungsversorgungseinheit 211, 219 führt, welche die Leistungsversorgung der zweiten bzw. dritten Funktionseinheit 112, 111 steuert.

Zwischen den drei Schaltungsblöcken ist jeweils eine Entkopplungsschaltung 202, 208 angeordnet.

Vorteile dieser Anordnung sind beispielsweise in einer einfachen Herstellung einer Rangfolge bezüglich der Priorität der Energieversorgung zu sehen. Die Funktionseinheit, deren Funktion sich zeitlich am längsten verzögern lässt, ist beispielsweise am Ende der seriellen Anordnung zur Energieverteilung angeordnet (siehe Funktionseinheit 111). Die Funktionseinheit, welche als erstes mit Energie versorgt werden sollte, ist am Anfang der seriellen Anordnung angeordnet (siehe Funktionseinheit 113).

Die Aufteilung der Energiespeicher 203, 213, 218 auf die Funktionseinheiten 113, 112, 111 ermöglicht eine bedarfsgerechte Anpassung der entsprechenden Speichergröße auf die Anforderung der jeweiligen, dem Energiespeicher zugeordneten Funktionseinheit. Durch die Optimierung der Speichergrößen lassen sich Kosten sparen. Außerdem lässt sich für jede Funktionseinheit ein passender Kompromiss zwischen der Pufferwirkung der Speichereinheit und der Startzeit, also der Zeit für das Aufladen des Energiespeichers beim Einschalten der Spannungsversorgung der Stromschleife hinsichtlich der Speichergröße einstellen. Im Idealfall können für bestimmte Funktionseinheiten die Pufferspeicher ganz entfallen.

Darüber hinaus wird eine gegenseitige Beeinflussung der Funktionseinheiten über die Energieversorgung weitgehend verhindert.

Ein wesentlicher Aspekt der Erfindung besteht in der Bereitstellung eines Füllstandmessgeräts, insbesondere eines nach dem Laufzeitprinzip arbeitenden Füllstandmessgeräts (Radar, Ultraschall, TDR), welches mehrere (mindestens zwei) Funktionseinheiten aufweist, wobei mindestens eine davon eine stark schwankende Leistungsaufnahme aufweist (z. B. Spitzenleistung größer Faktor 3 mal Durchschnittslast). Die Energieaufnahme des Füllstandmessgeräts von der externen Energieversorgungsquelle ist zumindest zeitweise konstant und durch die äußeren Umstände fest vorgegeben.

Die einzelnen Funktionseinheiten sind in Bezug auf die externe Energieversorgung seriell zueinander angeordnet und zwischen den Funktionseinheiten sind Entkopplungsschaltungen vorgesehen, welche beispielsweise zur bevorzugten Aufteilung der zufließenden Energie und/oder zur Verhinderung einer ungewünschten Umverteilung von Energie zwischen den einzelnen Funktionseinheiten dienen.

Des Weiteren sind zumindest bestimmten Funktionseinheiten Energiespeicher in Form von Speicherkondensatoren oder Akkumulatoren zugeordnet, wobei diese zumindest für diejenigen Funktionseinheiten als Energiepuffer erforderlich sind, bei denen die eigene maximale Leistungsaufnahme und die maximale Leistungsaufnahme der in der Rangfolge vorgeschalteten Funktionseinheiten in Summe den Minimalwert der zufließenden Leistung übersteigt. Unter "zufließender Leistung" ist die Leistung aus der externen Energieversorgung zu verstehen, welche dem Sensor bereitgestellt wird.

Für sämtliche Ausführungsbeispiele kann das folgende gelten: Die erste Funktionseinheit 113 ist jene Funktionseinheit, die hinsichtlich der Energieversorgung und ihrem Betrieb als erstes in der Reihe kommt. Die zweite Funktionseinheit 111 dagegen ist die, die als letzte in der Reihe steht. Dazwischen sind weitere, dritte Funktionseinheiten 112 in beliebiger Anzahl möglich. Zur letzten und zu jeder dazwischenliegenden Funktionseinheit ist eine Entkopplungsschaltung gehörig. Außerdem ist zur letzten Funktionseinheit ein Pufferspeicher 218 vorgesehen. Die Pufferspeicher 203, 213 zur ersten und dritten Funktionseinheit sind optional.

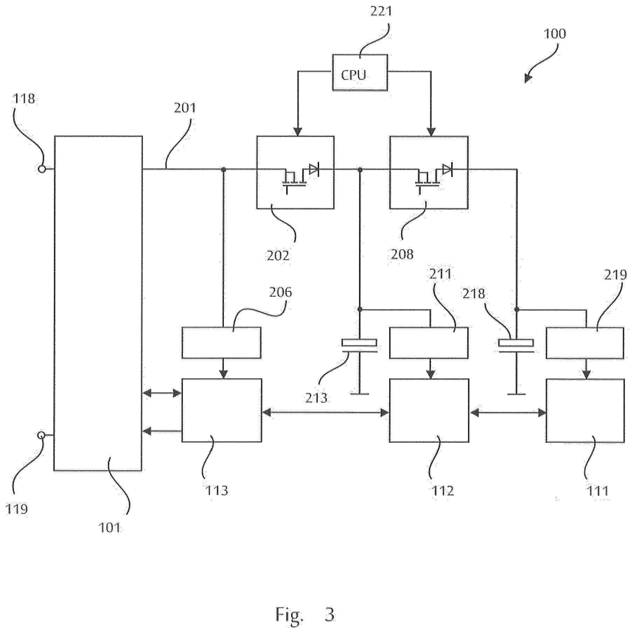

Fig. 3 zeigt ein Blockschaltbild eines Füllstandmessgeräts 100 gemäß einem weiteren Ausführungsbeispiel der Erfindung. Bei den drei dargestellten Funktionseinheiten handelt es sich um die Kommunikationsschaltung 113, die Messschaltung 112 und die Sensorschaltung 111. Es sind genau zwei Entkopplungsschaltungen 202, 208 vorgesehen. Die eine befindet sich zwischen dem Schaltungsblock, der die Kommunikationsschaltung 113 und deren Leistungsversorgung 206 aufweist, und dem Schaltungsblock, welcher die Messschaltung 112 mit der zugeordneten Leistungsversorgung 211 und dem Energiespeicher 213 aufweist. Die zweite Entkopplungsschaltung 208 befindet sich zwischen dem letztgenannten Schaltungsblock und dem Schaltungsblock, der die Sensorschaltung 111, die zugeordnete Leistungsversorgung 219 und den Pufferenergiespeicher 218 aufweist.

In der Rangfolge bezüglich der Energieversorgung liegt die Kommunikationseinheit 113 an erster Stelle, also am nähesten zu den Versorgungsanschlüssen 118, 119 und der Sensor-Loop-Schnittstelle 101. Dies ist deswegen so, weil die Funktion der Kommunikationseinheit 113 jederzeit verfügbar sein soll. Ihre maximale Leistungsaufnahme liegt unterhalb der minimalen Leistung, die am Ausgang der Sensor-Loop-Schnittstelle 101 verfügbar ist. Deshalb kann für diese Funktionseinheit auf einen Energiespeicher verzichtet werden.

Die nächstwichtigste Funktionseinheit ist die Messschaltung 112, die eine Messung der Sensorschaltung 111 auslöst, aus diesem Grunde mit dieser kommunikativ verbunden ist, und diese Messung dann auch auswertet.

Da der maximale Energiebedarf der Kommunikationsschaltung 113 und der Messschaltung 112 in Summe höher ist als die minimale Leistung, die am Ausgang der Sensor-Loop-Schnittstelle 101 verfügbar ist, ist über den Energiespeicher 213 ein Energiepuffer für die Messschaltung 112 vorgesehen. Da das Energiedefizit selbst im energetisch ungünstigsten Fall nicht allzu groß werden kann, genügt ein verhältnismäßig kleiner Energiespeicher. Dies hat den Vorteil, dass beim Einschalten der Spannung dieser Energiespeicher 213 relativ schnell geladen ist und dadurch die Messschaltung eine relativ kurze Startzeit aufweist.

Die Sensorschaltung 111 ist am Ende der seriellen Anordnung der Funktionseinheiten angeordnet, weil sie nicht ständig verfügbar sein muss und ihre Aktivierung je nach Energiesituation für eine gewisse Zeit verzögert werden kann. Da das Verhältnis von maximaler Leistung zur Durchschnittsleistung groß sein kann, ist ein relativ großer Energiespeicher 218 vorgesehen.

Die Ladung dieses Energiespeichers 218 und des Energiespeichers 213 der Messschaltung 112 wird durch jeweils eine Entkopplungsschaltung 202, 208 (Decoupling Circuitry) beeinflusst. Durch diese kann beispielsweise die Ladung zugunsten der Leistungsaufnahme der in der seriellen Anordnung höhergestellten Funktionseinheiten 113 bzw. 113 und 112 eingeschränkt oder ganz gestoppt werden.

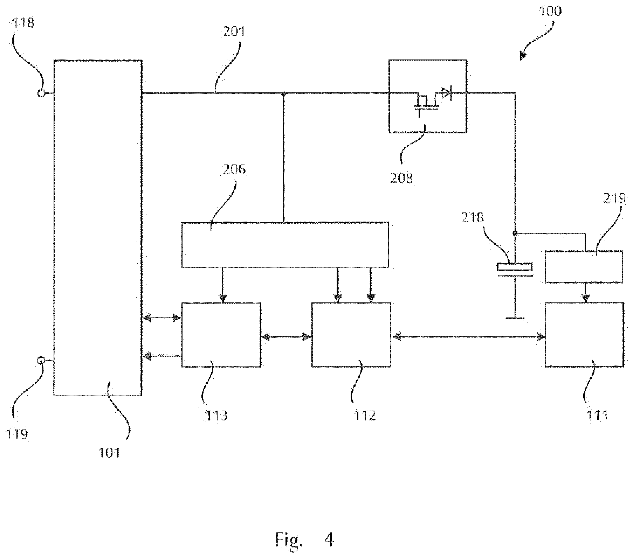

Fig. 4 zeigt ein Blockschaltbild eines Füllstandmessgeräts 100 gemäß einem weiteren Ausführungsbeispiel der Erfindung. Im Unterschied zum Ausführungsbeispiel der Fig. 3 liegt die maximale Leistungsaufnahme der Kommunikationsschaltung 113 und der Messschaltung 112 in Summe unterhalb der minimalen Leistung, die am Ausgang der Sensor-Loop-Schnittstelle 101 verfügbar ist. Deshalb können beide zusammen an höchster Stelle der Energie-Rangfolge stehen und benötigen keinen eigenen Energiespeicher.

Somit ist in diesem Ausführungsbeispiel nur ein einzelner interner Energiespeicher 218 vorgesehen, der dem Schaltungsblock der Sensorschaltung 111 und deren Leistungsversorgungseinheit 219 angehört und die Sensorschaltung 111 mit Pufferenergie versorgen kann. Zwischen diesem Schaltungsblock und den vorher genannten Funktionseinheiten 113, 112 befindet sich die Entkopplungsschaltung 208.

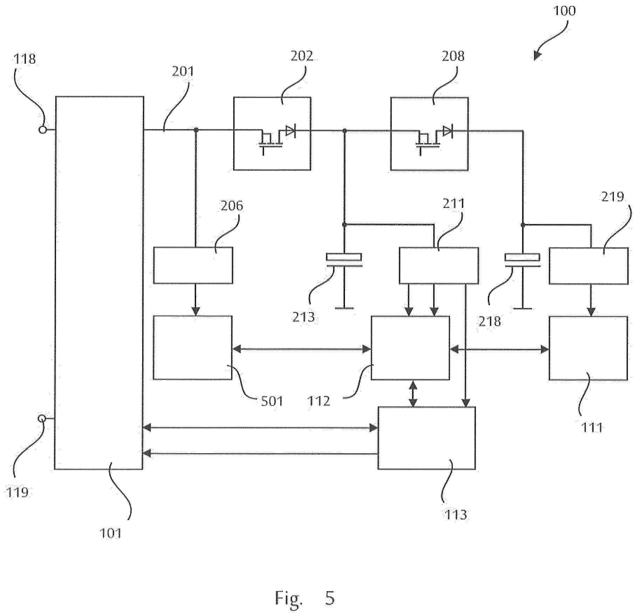

Fig. 5 zeigt ein Blockschaltbild eines Füllstandmessgeräts 100 gemäß einem Ausführungsbeispiel der Erfindung. Im Unterschied zur Fig. 3 wurden hier die Funktionseinheiten 111, 112, 113 etwas modifiziert. Eine Funkschnittstelle (Wireless Communication) 501, die man üblicherweise als Teil der Kommunikationsschaltung 113 betrachten würde, ist hier separiert und in der Energie-Rangfolge an vorderste Stelle gesetzt, weil beispielsweise der Messwert hierüber drahtlos übermittelt wird.

Die zweite Kommunikationsschaltung 113 (z. B. für die HART-Kommunikation, zur Kommunikation mit dem Vor-Ort-Bediendisplay, und zur Ausgabe des Schleifenstroms) steht zusammen mit der Messschaltung 112 an zweiter Stelle der seriellen Anordnung und somit an zweiter Stelle der Energie-Rangfolge. Sie benötigt im Gegensatz zur Funkschnittstelle 501 einen Energiespeicher 213.

Somit sind im Ausführungsbeispiel der Fig. 5 zwei Schaltungsblöcke mit einem eigenen Energiespeicher 213, 218 vorgesehen, welche voneinander und von der Kommunikationseinheit 501 durch eine Entkopplungsschaltung 202, 208 getrennt sind.

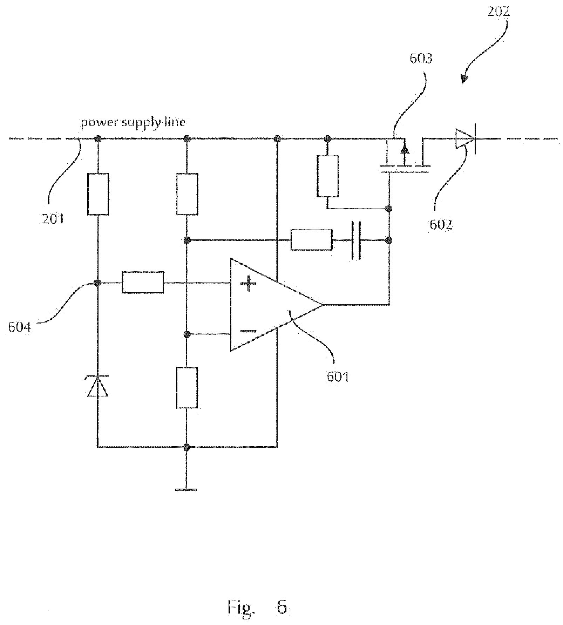

Fig. 6 zeigt ein Schaltbild einer Entkopplungsschaltung 202 gemäß einem Ausführungsbeispiel der Erfindung, mit der das Laden nachgeschalteter Energiespeicher beeinflusst werden kann. Eine auf Basis eines Operationsverstärkers 601 aufgebaute Regelschaltung vergleicht die Spannung an der Eingangsleitung (Power Supply Line) 201 mit einer Referenzspannung 604. Über den Transistor 603, beispielsweise einen Feldeffekttransistor, der in Reihe zur Leistungsversorgungsleitung 201 geschaltet ist, kann die Regelschaltung den Stromfluss zu den nachgeschalteten Funktionseinheiten beeinflussen.

Sinkt die Spannung an der Leistungsversorgungsleitung 201 als Folge einer aktuellen Leistungsaufnahme, die in Summe die zufließende Leistung übersteigt, unter einen vorgegebenen Wert ab, so wird beispielsweise der Transistor so weit gesperrt, dass der Stromfluss gedrosselt oder ganz unterbunden wird. Die nachfolgenden Funktionseinheiten müssen in diesem Fall entweder komplett abgeschaltet werden oder sich aus einem eigenen Energiespeicher versorgen.

Die Spannungsgrenze an der Power Supply Line 201, ab welcher dies passiert, ergibt sich beispielsweise aus dem Quotienten der maximalen Leistungsaufnahme der vor der Entkopplungsschaltung angeordneten Funktionseinheit(en) und dem maximal an der Leistungsversorgungsleitung 201 verfügbaren Strom. Im Beispiel der Fig. 5 ist die maximale Leistungsaufnahme der drahtlosen Kommunikationseinheit 25 mW und der minimale Strom der Leistungsversorgungsleitung 3,2 mA. Dies ergibt eine Spannungsgrenze von 7,8 V. Die Regelschaltung der Entkopplungsschaltung in Fig. 6 wird in diesem Fall also so eingestellt, dass am negativen Eingang des Operationsverstärkers 601 die Spannung an der Leistungsversorgungsleitung 201 gefühlt wird und mit der Referenzspannung 604 am positiven Eingang des Operationsverstärkers 601 verglichen wird. Sinkt die Spannung an der Leistungsversorgungleitung 201 auf einen Wert von 7,8V, so regelt der Regel-Operationsverstärker 601 den Bahnwiderstand des Feldeffekttransistor (FET) 603 auf einen höheren Wert, so dass der über den FET fließende Strom abnimmt und sich so die Spannung an der Leistungsversorgungsleitung auf den Wert von 7,8V stabilisieren kann. Damit wird durch die beispielhafte Regelschaltung der Entkopplungsschaltung 202 sichergestellt, dass die Schaltungsblöcke, die in Energieflussrichtung gesehen vor der Entkopplungsschaltung liegen, immer mit ausreichend Energie versorgt werden können. Die Schaltungsblöcke, die hinter der Entkopplungsschaltung liegen, erhalten demnach nur Energie, die von den davor liegenden Schaltungsblöcken nicht benötigt wird.

Die Regelung der Entkopplungsschaltung aus Fig. 6 auf einen vordefinierten Wert der Spannung an der Leistungsversorgungsleitung 201 lässt sich in einem nicht dargestellten Ausführungsbeispiel ersetzen durch eine Regelung auf einen vordefinierten Wert des Spannungsabfalls innerhalb der Sensor-Loop-Schnittstelle 101 (s. Fig. 1), beispielsweise den Spannungsabfall über dem Längstransistor des Stromreglers 105. Erhöht sich der Spannungsabfall über dem Längstransistor, so deutet dies auf eine aktuell höhere Gesamtleistungsaufnahme des Füllstandmessgeräts in Relation zur über die Anschlüsse 118, 119 zufließenden Leistung hin. Die Regelschaltung muss in diesem Fall durch Reduzierung des an den Ausgang der Entkopplungsschaltung fließenden Strom reagieren, so dass sich der genannte Spannungsabfall nicht weiter erhöht.

Die Entkopplungsschaltung ist also eine in Reihe in die Leistungsversorgungsleitung 201, 207, 214 geschaltete Schaltung die den durchfließenden Strom so regelt, dass eine ausreichende Energieversorgung der Schaltungsblöcke sichergestellt ist, die in Energieflussrichtung gesehen ihren Energiebedarf vor der Entkopplungsschaltung abzweigen.

Wird optional zum Transistor 603 zusätzlich noch eine Diode 602 in Reihe geschaltet, so wird eine schnelle Entladung nachfolgender Energiespeicher bei abgeschalteter Spannung der Stromschleife verhindert. Dies hat den Vorteil, dass die im Energiespeicher gespeicherte Energie noch bei einem erneuten Wiedereinschalten wenigstens teilweise vorhanden sein kann. Außerdem verhindert eine Diode Ausgleichsströme zwischen verschiedenen Energiespeichern.

## Patentansprüche

1. Füllstandmessgerät (100), aufweisend:
eine erste Funktionseinheit (113), bei der es sich um die Kommunikationsschaltung des Füllstandmessgeräts handelt, und eine zweite Funktionseinheit (111), bei der es sich um die Messschaltung des Füllstandmessgeräts oder die Sensorschaltung des Füllstandmessgeräts handelt, welche in Bezug auf eine externe Energieversorgung des Füllstandmessgeräts seriell geschaltet sind;
einen ersten Energiespeicher (218), ausgeführt als Energiepuffer zum Ausgleich eines schwankenden Energieverbrauchs der zweiten Funktionseinheit;
eine erste Entkopplungsschaltung (208), welche zwischen der ersten Funktionseinheit und der zweiten Funktionseinheit angeordnet ist und zur bedarfsgerechten Aufteilung der zur Verfügung stehenden Energie von der externen Energieversorgung zwischen der ersten Funktionseinheit und der zweiten Funktionseinheit ausgeführt ist, so dass die erste Funktionseinheit in jedem Fall mit ausreichend Energie für deren Betrieb versorgt wird und, falls die zur Verfügung stehende Energiemenge entsprechend gering ist, die zweite Funktionseinheit und der erste Energiespeicher zeitweilig nicht oder nur in geringem Umfang mit Energie versorgt werden.

2. Füllstandmessgerät nach Anspruch 1,
wobei die erste Entkopplungsschaltung (208) zum Verhindern eines Stromflusses vom ersten Energiespeicher (218) zur ersten Funktionseinheit (113) ausgeführt ist.

3. Füllstandmessgerät nach Anspruch 1 oder 2,
wobei die erste Funktionseinheit (113) in Bezug auf die externe Energieversorgung vor der zweiten Funktionseinheit (111) angeordnet ist.

4. Füllstandmessgerät nach einem der vorhergehenden Ansprüche, weiterhin aufweisend:
eine dritte Funktionseinheit (112), welche in Bezug auf die externe Energieversorgung seriell zur ersten und zweiten Funktionseinheit (113, 111) und zwischen der ersten und der zweiten Funktionseinheit angeordnet ist;
eine zweite Entkopplungsschaltung (202), welche zwischen der ersten Funktionseinheit (113) und der dritten Funktionseinheit (112) angeordnet ist und zur bedarfsgerechten Aufteilung der zur Verfügung stehenden Energie von der externen Energieversorgung zwischen der ersten Funktionseinheit und der dritten Funktionseinheit ausgeführt ist.

5. Füllstandmessgerät nach Anspruch 4, weiterhin aufweisend:
einen zweiten Energiespeicher (213), ausgeführt als Energiepuffer zum Ausgleich eines schwankenden Energieverbrauchs der dritten Funktionseinheit.

6. Füllstandmessgerät nach einem der vorhergehenden Ansprüche,
wobei die zweite Funktionseinheit (111) eine schwankende Leistungsaufnahme aufweist, welche im Maximum mehr als dreimal so hoch ist wie die durchschnittliche Leistungsaufnahme.

7. Füllstandmessgerät nach einem der vorhergehenden Ansprüche,
wobei das Füllstandmessgerät zum Anschluss an eine Zweileiterschleife ausgeführt ist, über welche das Füllstandmessgerät mit Energie für den Messbetrieb versorgbar ist und über welche der Messwert an eine externe Einrichtung kommunizierbar ist.

8. Füllstandmessgerät nach Anspruch 7, wobei es sich bei der Zweileiterschleife um eine 4-20mA-Zweileiterschleife handelt.

9. Füllstandmessgerät nach einem der vorhergehenden Ansprüche, weiterhin aufweisend:
eine Steuerung (221) zum Steuern zumindest einer der Entkopplungsschaltungen (202, 208, 215) und somit zumindest einer der bedarfsgerechten Aufteilungen der zur Verfügung stehenden Energie von der externen Energieversorgung zwischen der ersten Funktionseinheit und der zweiten Funktionseinheit.

## Claims

1. Level measuring device (100), comprising:
a first functional unit (113), which is the communication circuit of the level measuring device, and a second functional unit (111), which is the measuring circuit or the sensor circuit of the level measuring device, which are connected in series with respect to an external power supply of the level measuring device;
a first energy store (218), designed as an energy buffer to equalise fluctuating energy consumption of the second functional unit;
a first decoupling circuit (208), which is arranged between the first functional unit and the second functional unit and is designed to distribute the available power from the external power supply between the first functional unit and the second functional unit according to requirements, so that it can be ensured that the first functional unit is always supplied with sufficient power for its operation, if the amount of available power is correspondingly low, the second functional unit and the first energy store are temporarily not supplied with any power or only to a low extent.

2. Level measuring device according to claim 1,
wherein the first decoupling circuit (208) is designed to prevent a current flow from the first energy store (218) to the first functional unit (113).

3. Level measuring device according to claim 1 or 2,
wherein the first functional unit (113) is arranged upstream of the second functional unit (111) with respect to the external power supply.

4. Level measuring device according to any of the preceding claims, further comprising:
a third functional unit (112), which is arranged in series relative to the first and second functional unit (113, 111) with respect to the external power supply and between the first and second functional unit;
a second decoupling circuit (202), which is arranged between the first functional unit (113) and the third functional unit (112) and is designed to distribute the available power from the external power supply between the first functional unit and the third functional unit according to requirements.

5. Level measuring device according to claim 4, further comprising:
a second energy store (213), designed as an energy buffer to equalise fluctuating power consumption by the third functional unit.

6. Level measuring device according to any of the preceding claims,
wherein the second functional unit (111) has fluctuating power consumption which at a maximum is more than three times as high as the average power consumption.

7. Level measuring device according to any of the preceding claims,
wherein the level measuring device is designed for connecting to a two-wire loop via which the level measuring device can be supplied with power for the measuring operation and via which the measured value can be communicated to an external device.

8. Level measuring device according to claim 7, wherein the two-wire loop is a 4-20mA two-wire loop.

9. Level measuring device according to any of the preceding claims, further comprising:
a control device (221) for controlling at least one of the decoupling circuits (202, 208, 215) and therefore at least one of the distributions of the available power from the external power supply between the first functional unit and the second functional unit according to requirements.

## Revendications

1. Appareil de mesure de niveau de remplissage (100) comportant :
une première unité fonctionnelle (113) qui est le circuit de communication de l'appareil de mesure de niveau de remplissage, et une deuxième unité fonctionnelle (111) qui est le circuit de mesure de l'appareil de mesure de niveau de remplissage ou le circuit de détection de l'appareil de mesure de niveau de remplissage, lesquelles sont branchées en série par rapport à une alimentation en énergie externe de l'appareil de mesure de niveau de remplissage,
un premier accumulateur d'énergie (218) configuré comme un tampon d'énergie pour équilibrer une consommation d'énergie fluctuante de la deuxième unité fonctionnelle,
un premier circuit de découplage (208) agencé entre la première unité fonctionnelle et la deuxième unité fonctionnelle et configuré pour répartir en fonction des besoins l'énergie disponible provenant de l'alimentation en énergie externe entre la première unité fonctionnelle et la deuxième unité fonctionnelle, de sorte que la première unité fonctionnelle est alimentée dans tous les cas avec une énergie suffisante pour son fonctionnement et, dans le cas où la quantité d'énergie disponible est relativement faible, la deuxième unité de fonctionnelle et le premier accumulateur d'énergie ne sont temporairement pas alimentés ou ne sont alimentés en énergie que dans une moindre mesure.

2. Appareil de mesure de niveau de remplissage selon la revendication 1,
dans lequel le premier circuit de découplage (208) est configuré pour empêcher une circulation de courant du premier accumulateur d'énergie (218) à la première unité fonctionnelle (113).

3. Appareil de mesure de niveau de remplissage selon la revendication 1 ou 2,
dans lequel la première unité fonctionnelle (113) est agencée en amont de la deuxième unité fonctionnelle (111) par rapport à l'alimentation en énergie externe.

4. Appareil de mesure de niveau de remplissage selon l'une des revendications précédentes, comportant en outre :
une troisième unité fonctionnelle (112) qui, par rapport à l'alimentation en énergie externe, est montée en série avec les première et deuxième unités fonctionnelles (113, 111) et entre les première et deuxième unités fonctionnelles,
un second circuit de découplage (202) qui est agencé entre la première unité fonctionnelle (113) et la troisième unité fonctionnelle (112) et qui est configuré pour répartir en fonction des besoins l'énergie disponible provenant de l'alimentation en énergie externe entre la première unité fonctionnelle et la troisième unité fonctionnelle.

5. Appareil de mesure de niveau de remplissage selon la revendication 4, comportant en outre :
un second accumulateur d'énergie (213) configuré comme un tampon d'énergie pour équilibrer une consommation d'énergie fluctuante de la troisième unité fonctionnelle.

6. Appareil de mesure de niveau de remplissage selon l'une des revendications précédentes,
dans lequel la deuxième unité fonctionnelle (111) a une puissance consommée fluctuante dont le maximum est supérieur à trois fois la puissance consommée moyenne.

7. Appareil de mesure de niveau de remplissage selon l'une des revendications précédentes,
dans lequel l'appareil de mesure de niveau de remplissage est configuré pour être raccordé à une boucle à deux conducteurs par l'intermédiaire de laquelle l'appareil de mesure de niveau de remplissage peut être alimenté en énergie pour la mesure et par l'intermédiaire de laquelle la valeur de mesure peut être communiquée à un dispositif externe.

8. Appareil de mesure de niveau de remplissage selon la revendication 7, dans lequel la boucle à deux conducteurs est une boucle à deux conducteurs de 4 à 20 mA.

9. Appareil de mesure de niveau de remplissage selon l'une des revendications précédentes, comportant en outre :
une commande (221) pour commander au moins un des circuits de découplage (202, 208, 215) et ainsi au moins une des répartitions en fonction des besoins de l'énergie disponible provenant de l'alimentation en énergie externe entre la première unité fonctionnelle et la deuxième unité fonctionnelle.
